# EUROPÄISCHE PATENTSCHRIFT

(11) **EP 0 478 643 B1**
(45) Veröffentlichungstag und Bekanntmachung des Hinweises auf die Patenterteilung: **08.06.1994**
(21) Anmeldenummer: 90909673.7
(22) Anmeldetag: 16.06.1990
(51) Int. Cl.: C09B 41/00

(54) **VERFAHREN ZUR HERSTELLUNG VON AZOPIGMENTEN**
PROCESS FOR MAKING AZO-PIGMENTS
PROCEDE DE FABRICATION DE PIGMENTS AZOIQUES

(30) Priorität: 22.06.1989 DE 3920455
(43) Veröffentlichungstag der Anmeldung: 08.04.1992
(73) Patentinhaber: HOECHST AKTIENGESELLSCHAFT, 65926 Frankfurt am Main (DE)
(72) Erfinder: RIEPER, Wolfgang, D-6000 Frankfurt (DE)
(86) Internationale Anmeldenummer: EP9000955
(87) Internationale Veröffentlichungsnummer: WO9015844

(56) Entgegenhaltungen:
- EP-A- 0 240 902
- EP-A- 0 319 452

## Beschreibung

Die Erfindung betrifft die Herstellung von Azopigmenten auf Basis von chlorierten Benzol-diazonium- oder Biphenyl-bis-diazoniumsalzen und CH-aciden Kupplungskomponenten.

Industriell produzierte organische Pigmente können bei Vorliegen gewisser struktureller Gegebenheiten der Ausgangskomponenten sowie aufgrund von Nebenreaktionen in Abhängigkeit vom gewählten Typ des Syntheseverfahrens polychlorierte Biphenyle (PCB) als Verunreinigung enthalten [vgl. R. Anliker, Swiss Chem 3 (1981), Nr. 1-2, S. 17-23 (deutsch) oder S. 25-29 (englisch); W. Herbst und K. Hunger in "Industrielle Organische Pigmente", VCH-Verlag, Weinheim 1987, S. 577-578].
Vor allem die Persistenz und bioakkumulativen Eigenschaften höher chlorierter Biphenyle (mit drei und mehr Chloratomen) haben dazu geführt, daß die Produktion dieser früher technisch breit genutzten Verbindungsklasse eingestellt und sogar der Vertrieb von Verbindungen und Zubereitungen, die PCB als Verunreinigungen aufweisen, Beschränkungen und Kontrollen unterworfen wurde. Die entsprechenden gesetzlichen Auflagen sind in den letzten Jahren in zunehmendem Maße verschärft und die in Handelsprodukten mengenmäßig zugelassenen Grenzwerte an polychlorierten Biphenylen drastisch erniedrigt worden (in den USA beispielsweise auf maximal 25 »g PCB pro Gramm des in den Handel gebrachten Stoffes).
Es zeigte sich allerdings, daß unter den Azopigmenten hauptsächlich Monoazoverbindungen auf der Basis von Di- und Trichloranilinen wie auch Disazopigmente der chlorierten Biphenylreihe mit einer unerwünschten Belastung an polychlorierten Biphenylen anfallen können, wenn die Pigmente nach konventionellen großtechnischen Kupplungsverfahren hergestellt werden. Die PCB-Gehalte in diesen Azopigmenten überschreiten dabei häufig die in den USA festgelegte Toleranz.

Nun lag es zunächst nahe, die PCBs aus den damit verunreinigten Farbmitteln durch Lösemittelextraktion zu entfernen. So wird z.B. in der europäischen Patentschrift EP-B-0 063 321 erläutert, daß man rohe organische Pigmente von unterschiedlich chemischer Kategorie durch Behandlung bei 50-180 °C mit dem Gemisch eines hydrophilen und eines hydrophoben organischen Lösemittels, wobei dieselben nur begrenzt miteinander mischbar sein sollen, in Produkte von hoher Reinheit überführen kann. Bei dieser Technik sammeln sich dann die Verunreinigungen in einer der organischen Phasen und lassen sich auf dem erwähnten Weg abtrennen. Mit solchen und ähnlichen Reinigungsmethoden werden die vorhandenen PCB-Mengen jedoch oft nur unvollständig erfaßt, da in erster Linie Pigmente mit großer spezifischer Oberfläche, d.h. mit hohem Feinstkornanteil, Verunreinigungen meist hartnäckig an ihrer aktiven Oberfläche adsorptiv binden und darüber hinaus auch in Agglomeraten okklusiv festhalten. Die Lösemittelbehandlung eines Pigmentes ist zudem fast immer mit einer Veränderung der coloristischen Eigenschaften verbunden, so daß Dauer und Intensität einer beabsichtigten Reinigungsprozedur engen Spielräumen unterworfen sind. Bei wenig lösemittelbeständigen Pigmenten kann deshalb eine Reinigung analog den oben beschriebenen Verfahren überhaupt nicht angewendet werden.
Erschwerend kommt der Umstand hinzu, daß bei allen Reinigungsoperationen mittels organischer Losemittel die darin angereicherten Verunreinigungen, also etwa die polychlorierten Biphenyle, wiederum eliminiert und danach vernichtet werden müssen, was gerade im Falle von PCB erhebliche technische Probleme aufwirft:
Wegen der außergewöhnlichen Resistenz der zu beseitigenden Verbindungsklasse ist deren Abbau mit chemischen Methoden, thermischen Verfahren, Photolyse u.a. äußerst schwierig [Review-Artikel von D. Martinetz in Chem. Techn. 39 (1987)/Heft 11, S. 466-470]. Die Schärfe dieser Abbaumethoden läßt es in der Regel auch nicht zu, PCB-Verunreinigungen in Pigmenten gegebenenfalls zu zerstören, ohne das Farbmittel dabei zu schädigen.

Aus den genannten Gründen war es in jedem Falle erstrebenswert, Syntheseverfahren für Pigmente zu entwickeln, welche die spurenweise Entstehung von PCB als Nebenprodukt der Kupplungsreaktion von vornherein ausschließen oder wenigstens weitgehend zurückdrängen. So konnten gemäß der veröffentlichten europäischen Patentanmeldung EP-A-0 319 452 für die Erzeugung von Monoazopigmenten, ausgehend von Di- und Trichloranilinen als Diazokomponenten, spezielle Kupplungsbedingungen aufgefunden werden, die zu einer Senkung des PCB-Gehaltes in den entsprechenden Pigmenten auf Werte von höchstens 25 »g/g führten. Der hieraus bekannte Stand der Technik bezieht sich jedoch ausschließlich auf Verfahrensvarianten, nach denen man die Azokupplung in einem pH-Bereich von weniger als 7 durch Zugabe der Diazoniumsalzlösung zu einer Suspension oder Lösung der Kupplungskomponente, oder durch gleichzeitiges Zudosieren der wäßrigen Suspensionen oder Lösungen der beiden Umsetzungspartner (Pigmentbildungskomponenten) in ein Reaktionsgefäß vornimmt. Als kennzeichnendes Merkmal erfordert die dort beschriebene Arbeitsweise fernerhin begrenzte molare Überschüsse an Diazoniumsalz, bezogen auf die Summe der Molzahlen von der im Reaktionsgemisch vorhandenen Kupplungskomponente und bereits entstandenem Pigment, wobei der zulässige Überschuß an Diazoniumsalz vom pH-Bereich der Kupplungsreaktion abhängig gemacht wird. So ist beispielsweise in dem bei Azokupplungen zur Herstellung von Pigmenten bevorzugten pH-Bereich von 4 bis 7 ein Diazoniumsalz-Überschuß von weniger als 0,05 Mol-% definiert worden, um zu Produkten mit PCB-Gehalten von höchstens 25 »g/g zu gelangen.

Verfährt man hingegen bei der Synthese von Monoazopigmenten der Di- oder Trichloranilin-Reihe nach einer Methode, bei welcher der Zulauf der Kupplungskomponente zur vorgelegten Lösung des Diazoniumsalzes erfolgt (sogenannte "indirekte" Kupplung), so kann das anfallende Pigment polychlorierte Biphenyle in einer Größenordnung aufweisen, die das gesetzlich vorgeschriebene Limit von 25 »g PCB pro g Pigment weit überschreitet. Aber auch Azopigmente, die nach einem Verfahren hergestellt werden, entsprechend dem im Verlauf der Kupplungsoperation zur Aufrechterhaltung eines bestimmten pH-Bereichs kontinuierlich oder diskontinuierlich Lauge zur Reaktionsmischung zudosiert wird (sogenannte "Pendelkupplung"), enthalten - bei gewissen strukturellen Voraussetzungen - oft deutlich über 25 »g/g liegende PCB-Anteile.

Es war deshalb besonders wünschenswert, über ein verbessertes Verfahren der Azokupplung zu verfügen, bei dem die vorstehend bezeichneten Verfahrenseinschränkungen entbehrlich sind und Pigmente mit besonders geringem Gehalt an PCB-Verunreinigungen erhalten werden.

Gegenstand der vorliegenden Erfindung ist somit ein Verfahren zur Herstellung von Monoazopigmenten der allgemeinen Formel I 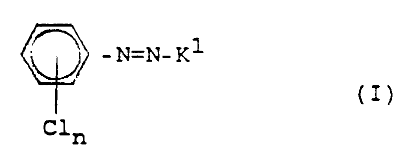
oder von Disazopigmenten der allgemeinen Formel II 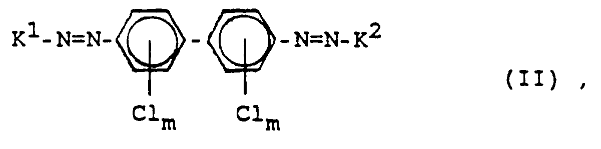
worin n für 1, 2 oder 3 und m für 1 oder 2 stehen, K¹ und K² jeweils den Rest einer CH-aciden Kupplungskomponente H-K¹ bzw. H-K² aus der Acetessigsäurearylamid- oder Naphthol-Reihe oder von heterocyclischer Struktur bedeuten und K¹ und K² gleich oder verschieden sind, welche einen Gehalt von höchstens 25 »g an polychlorierten Biphenylen mit mindestens 4 Chloratomen (PCB) pro Gramm Pigment aufweisen, durch Azokupplung im wäßrigen Medium, dadurch gekennzeichnet, daß man die Kupplungsreaktion in Gegenwart von begrenzt oder unbegrenzt wasserlöslichen Olefinen der allgemeinen Formel III 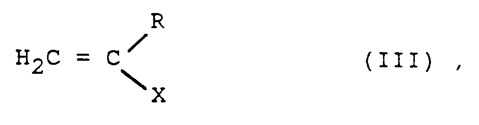
durchführt, worin
- R: ein Wasserstoffatom, oder eine Alkyl- oder Alkoxygruppe darstellt und
- X: für einen Rest der Formeln

-COOR¹, -CONHR² oder -NR³COR⁴

steht oder - sofern R kein Alkoxy ist - auch den Rest -CN bedeutet, in denen
- R¹: Wasserstoff, Alkyl oder Alkyl, das durch 1 oder mehrere Reste aus der Gruppe Hydroxy, Alkoxy, Amino, Alkylamino und Dialkylamino substituiert ist,
- R²: Wasserstoff, Alkyl oder Alkyl, das durch 1 oder mehrere Reste aus der Gruppe Hydroxy, Alkoxy, Amino, Alkylamino, Dialkylamino, Sulfo, Carboxy, Alkoxycarbonyl und gesättigtes oder ungesättigtes Alkanoylamino sowie entsprechendes N-Alkanoyl-N-alkyl-amino substituiert ist,
- R³: Wasserstoff oder Alkyl und
- R⁴: Alkyl
definieren.

Bevorzugt werden im Rahmen der beschriebenen Pigmentsynthese Olefine der Formel III eingesetzt, in der
- R: Wasserstoff, C₁-C₄-Alkyl oder C₁-C₄-Alkoxy; insbesondere Wasserstoff, Methyl, Methoxy oder Ethoxy darstellt und der Rest
- X: die dafür durch die zuvor genannten Gruppierungen ausgewiesene Bedeutung hat, wobei dann
- R¹: Wasserstoff oder C₁-C₄-Alkyl, das durch 1 oder 2 Reste aus der Gruppe Hydroxy, C₁-C₄-Alkoxy, Amino, N-(C₁-C₄-Alkyl)-amino und N,N-Di-(C₁-C₄-Alkyl)-amino substituiert sein kann; insbesondere Wasserstoff, Methyl, Ethyl, 2-Hydroxyethyl, 3-Hydroxypropyl, 2-Aminoethyl, 2-(Dimethylamino)-ethyl, 3-Aminopropyl oder 3-(Dimethylamino)-propyl,
- R²: Wasserstoff oder C₁-C₄-Alkyl, das durch 1 bis 3 Reste aus der Gruppe Hydroxy, C₁-C₄-Alkoxy, Amino, N-(C₁-C₄-Alkyl)-amino, N,N-Di-(C₁-C₄-alkyl)-amino, Sulfo, Carboxy, (C₁-C₄-Alkoxy)-carbonyl, N-(C₂-C₅-Alkanoyl)-amino und N-(C₃-C₅-Alkenoyl)-amino substituiert sein kann; insbesondere Wasserstoff, C₁-C₄-Alkyl oder C₁-C₄-Alkyl, das durch 1 oder 2 Reste aus der Gruppe Hydroxy, Methoxy, Ethoxy, Amino, Methylamino, Ethylamino, N,N-Dimethylamino, N,N-Diethylamino, Sulfo, Carboxy, Acetamido und Acrylamido substituiert ist,
- R³: Wasserstoff oder C₁-C₄-Alkyl, insbesondere Wasserstoff, Methyl oder Ethyl, und
- R⁴: C₁-C₄-Alkyl, insbesondere Methyl oder Ethyl
definieren.

Besonders geeignet für das beanspruchte Verfahren sind olefinische Verbindungen der Formel III, worin der Rest X die Gruppierung -CONHR² ist und R sowie R² die obengenannten Bedeutungen haben.

Bei den dem Kupplungsgemisch zuzusetzenden Olefinen handelt es sich um leicht polymerisierbare Verbindungen. Die Wasserlöslichkeit derselben soll vorzugsweise mindestens 1 % betragen. Bevorzugt sind solche Olefine des aufgeführten Verbindungstyps, die sich bei den angegebenen Konzentrationen vollständig in Wasser lösen. Beispiele dafür sind u.a.:
Acrylsäure, 2-Methyl-propensäure (Methacrylsäure), Acrylsäure-methylester, 2-Ethoxy-acrylsäure-ethylester, (2-Hydroxyethyl)-acrylat, (2-Hydroxyethyl)-methacrylat, (2-Hydroxypropyl)-methacrylat, (2-Dimethylaminoethyl)-methacrylat,
Acrylsäureamid, Acrylsäure-N-methylamid, 2-Methylpropensäureamid (Methacrylsäureamid), N-Acetylacrylsäureamid, N-Hydroxymethyl-acrylsäureamid, 2-Acrylamido-glykolsäure, 2-Acrylamido-2-methylpropansulfonsäure, (3-Dimethylaminopropyl)-methacrylsäureamid, (2-Dimethylaminoethyl)-methacrylsäureamid, (3-Diethylaminopropyl)-acrylsäureamid, N-(1-Methoxymethyl-propyl)-acrylsäureamid, 2,2-Bisacrylamidoessigsäure, Vinyl-acetamid, N-Methyl-N-vinyl-acetamid, Acrylnitril, Methacrylnitril.

Aus der Zusammenstellung der oben erläuterten Verbindungen werden Acrylsäureamid und Methacrylsäureamid sowie deren Derivate bevorzugt verwendet. Die Olefine der Struktur III sind an sich bekannt und/oder können nach bekannten oder üblichen Methoden hergestellt werden.

Die jeweiligen Mengen der erfindungsgemäß einzusetzenden Olefine bewegen sich zwischen 0,01 und 1 Gew.-%, vorzugsweise 0,05 bis 0,5 Gew.-%, bezogen auf die nach der Azokupplung erhaltene wäßrige Pigmentsuspension, beziehungsweise zwischen 0,1 und 10 Gew.-%, vorzugsweise 0,5 bis 5 Gew.-%, bezogen auf die Menge des bei der Umsetzung gebildeten Pigmentes.

Bei dem erfindungsgemäßen Verfahren zur Herstellung PCB-armer Mono- oder Disazopigmente können alle üblichen Varianten von Azokupplungen im wäßrigen Medium praktiziert werden. Dabei ist es gleichgültig, ob im Verlauf der Kupplung die Diazoniumsalzlösung zur Lösung oder Suspension der jeweiligen Kupplungskomponente zugegeben wird oder ob man etwa die alkalische Lösung der Kupplungskomponente zur Diazoniumsalzlösung oder -suspension zulaufen läßt; die Kupplung kann auch durch gleichzeitiges Zusammenbringen der Lösungen oder Suspensionen der beiden Reaktionspartner in ein Umsetzungsgefäß erfolgen, wobei in jedem Fall statische oder dynamische Mischer benutzt werden können.
Die Azokupplung wird bevorzugt unter der Wirkung eines Puffergemisches, zweckmäßig bei einem pH-Wert im Bereich von 4 bis 7 durchgeführt; die für den Verlauf der Kupplungsreaktion günstigsten pH-Bedingungen können aber auch durch Zudosierung von Säure oder Lauge eingestellt sowie aufrecht erhalten werden.
Die Kupplung kann gegebenenfalls in Anwesenheit von nichtionogenen, anionischen oder kationischen oberflächenaktiven Verbindungen oder anderen Hilfsmitteltypen stattfinden, wie natürlichen oder synthetischen Harzen oder Harzderivaten aber auch Druckfarben-, Lack- oder Kunststoffadditiven.

Die bei der Kupplungsoperation angefallenen wäßrigen Pigmentsuspensionen werden in der Regel gleich nach der Synthese filtriert und die Pigmente salzfrei gewaschen. Der resultierende wäßrige Preßkuchen wird dann entweder direkt zum Pigmentieren verwendet oder nach dem Trocknen zunächst zu einem Pulver verarbeitet.

Das erfindungsgemäße Verfahren eignet sich besonders zur Senkung des PCB-Gehaltes solcher Monoazopigmente, die unter Verwendung von chlorierten Anilinen als Diazokomponenten nach großtechnisch praktizierten Kupplungsverfahren erzeugt werden. Als derartige Diazokomponenten kommen beispielsweise in Betracht:
2-Chloranilin, 3-Chloranilin, 4-Chloranilin, 2,3-Dichloranilin, 2,4-Dichloranilin, 2,5-Dichloranilin, 2,6-Dichloranilin, 3,4-Dichloranilin, 3,5-Dichloranilin, 2,3,4-Trichloranilin, 2,3,5-Trichloranilin, 2,3,6-Trichloranilin, 2,4,5-Trichloranilin, 2,4,6-Trichloranilin und 3,4,5-Trichloranilin, wobei 2,4-Dichloranilin, 2,5-Dichloranilin und 2,4,5-Trichloranilin bevorzugte Diazokomponenten darstellen.

Das erfindungsgemäße Verfahren eignet sich ferner zur Herstellung PCB-armer Disazopigmente ausgehend von chlorierten Diaminobiphenylen. Von diesen bifunktionellen Diazokomponenten seien als Beispiele genannt:
2,2'-Dichlor-4,4'-diamino-biphenyl, 3,3'-Dichlor-4,4'-diamino-biphenyl, 2,2',3,3'-Tetrachlor-4,4'-diamino-biphenyl, 2,2',5,5'-Tetrachlor-4,4'-diamino-biphenyl und 2,2',6,6'-Tetrachlor-4,4'-diamino-biphenyl,
wobei 3,3'-Dichlor-4,4'-diamino-biphenyl und 2,2',5,5'-Tetrachlor-4,4'-diamino-biphenyl bevorzugte Bisdiazokomponenten darstellen.

Von besonderem Interesse als CH-acide Kupplungskomponenten für die Synthese von Mono- oder Disazopigmenten nach dem erfindungsgemäßen Verfahren sind Acetessigsäurearylamide, wie z.B. Acetessigsäureanilid, das am Phenylring durch einen oder mehrere, vorzugsweise 1 bis 3, der Reste aus der Gruppe Methyl, Methoxy, Ethoxy, Nitro und Chlor substituiert sein kann und/oder am Phenylring einen ankondensierten 5- oder 6-gliedrigen Heterocyclus, vorzugsweise Benzimidazolon aufweisen kann; sowie Naphthol oder Naphtholderivate, wie 2-Hydroxy-3-naphthoesäure und 2-Hydroxy-3-naphthoesäure-N-arylamide, beispielsweise 2-Hydroxy-3-naphthoesäure-N-phenyl-amid, das am Phenylring durch einen oder mehrere der Reste aus der Gruppe Methyl, Methoxy, Ethoxy, Nitro, Alkanoylamino wie Acetamino, Aroylamino wie Benzoylamino, und Chlor substituiert sein kann und/oder am Phenylring einen ankondensierten 5- oder 6-gliedrigen Heterocyclus, vorzugsweise Benzimidazolon aufweisen kann; ferner alle CH-aciden Verbindungen, bei denen das aktivierte Wasserstoffatom an einem ein- oder mehrkernigen Heterocyclus gebunden ist, wie z.B. 1-Aryl-pyrazol-5-on, das in 3-Stellung durch Methyl, Carboalkoxy oder Acylamino substituiert sein kann, oder wie Barbitursäure, 2,6-Dihydroxypyridin, 2,4-Dihydroxy-chinolin, 1,5-Diazabicyclo[3,3,0]-octan-2,4,6,8-tetron, 2H-Pyrazolo[3,4-b]pyridin-3,6-dion, 1,2,3,5-Tetrahydro-imidazo[1,2-b]isochinolin-5-on, 9H-Pyrazolo[5,1-b]chinazolin-9-on oder 2,4-Dihydroxy-pyrimido[1,2-a]benzimidazol, um nur einige Vertreter aus der Reihe heterocyclischer Kupplungskomponenten zu nennen.

Ausgewählte Kupplungskomponenten für die Synthese von Monoazopigmenten nach dem erfindungsgemäßen Verfahren sind beispielsweise:
2-Hydroxy-3-naphthoesäure-N-arylamide wie 2-Hydroxy-3-naphthoesäureanilid, 2-Hydroxy-3-naphthoesäure-N-(2- oder 4-methylphenyl)-amid, 2-Hydroxy-3-naphthoesäure-N-(2-methoxy- oder 2-ethoxyphenyl)-amid, 2-Hydroxy-3-naphthoesäure-N-(2,5-dimethoxyphenyl)-amid und 5-(2-Hydroxy-3-naphthoylamino)-benzimidazol-2-on.

Bei der Synthese von Disazopigmenten finden als Kupplungskomponenten bevorzugt Verwendung: Acetessiganilide, die am Phenylkern durch 1 bis 3 der Reste aus der Gruppe Methyl, Methoxy, Ethoxy, Nitro und Chlor substituiert sein können, sowie 5-Acetoacetylbenzimidazolone.

Die nach dem erfindungsgemäßen Verfahren hergestellen Azopigmente können für die Colorierung von natürlichen und synthetischen Materialien verwendet werden. Insbesondere eignen sie sich zum Pigmentieren von Druckfarben für den Buch/Offsetdruck, Tiefdruck, Flexodruck und andere spezielle Druckverfahren, zur Herstellung pigmentierter Lacke auf Basis oxidativ trocknender oder ofentrocknender Systeme, zur Herstellung von Dispersionsfarben, zum Pigmentieren von Kunststoffen wie beispielsweise Polyvinylchlorid, Polyolefine, Polystyrole und deren Copolymerisate, Polymethylmethacrylate, Polyurethane, Polycarbonate, Polyester, Cellulosederivate, Elastomere oder Duroplaste, sowie als Farbmittel für die Spinnfärbung. Die nach der Erfindung erhältlichen Pigmente können auch für spezielle Applikationsgebiete eingesetzt werden, etwa als Farbmittel für elektrophotographische Toner, für Farbstrahldruckverfahren (z.B. Ink-Jet-Verfahren) oder Thermotransferbänder.

In den folgenden Beispielen beziehen sich Teile und Prozentangaben auf das Gewicht, sofern nichts anderes angezeigt ist. Volumenteile verhalten sich zu Gewichtsteilen wie Liter zu kg.

### Beispiel 1:

16,3 Teile 2,5-Dichloranilin werden in 37 Vol.-Teilen 33 %iger Salzsäure etwa 8 Stunden bis zur vollständigen Bildung des Amin-hydrochlorids verrührt. Nach Kühlung unter Zugabe von Eis wird sodann bei -5 bis 0 °C durch Zulauf von 14 Vol.-Teilen einer 40 %igen wäßrigen Natriumnitritlösung das Amin diazotiert. Nach weiterem einstündigen Rühren wird der Ansatz durch Auffüllen mit Wasser auf 400 Vol.-Teile verdünnt, der vorhandene Nitritüberschuß mittels Amidosulfonsäure zerstört, Kieselgur als Filterhilfsmittel zugefügt und die resultierende Diazoniumsalzlösung filtriert. Man trägt in diese Lösung nunmehr 1,2 Teile Acrylamid ein und stumpft die so vorbereitete Diazokomponente mit einem aus 45 Teilen 33 %iger Natronlauge und 35 Teilen Eisessig angesetzten Puffergemisch auf einen pH-Wert von 4 bis 4,5 ab.
In einem zweiten Gefäß werden 32,5 Teile 5-(2-Hydroxy-3-naphthoylamino)-benzimidazol-2-on in 300 Vol.-Teilen Wasser angerührt und durch Zugabe von 30 Teilen 33 %iger Natronlauge bei 30-35 °C gelöst.
Die auf vorstehende Weise erhaltene Lösung der Kupplungskomponente wird nun innerhalb einer Stunde bei 0-10 °C unter Rühren in die vorgelegte, abgepufferte Diazoniumsalzlösung getropft, wobei der pH-Wert des Reaktionsgemisches allmählich auf 5 bis 5,5 ansteigt. Nach beendetem Zulauf der Kupplungskomponente und sobald durch Tüpfelproben mit H-Säure keine Diazoniumionen mehr nachweisbar sind, erhitzt man die Suspension kurz auf 95 °C, filtriert dann das ausgefallene Azopigment ab, wäscht es mit Wasser salzfrei und trocknet es bei 60 °C.

Zur analytischen Bestimmung des Gehaltes an polychlorierten Biphenylen wird eine Pulverprobe des so erhaltenen Kupplungsproduktes C.I. Pigment Brown 25 - No. 12510 (GAS-Nr. 6992-11-6) zunächst mit einer Standardlösung zweier bekannter chlorierter Biphenyle dotiert, in etwa 96 %iger Schwefelsäure gelöst und die resultierende Lösung in dem nachfolgend beschriebenen, kombinierten Extraktions-/Reinigungs-Verfahren mit soviel Kieselgel vermischt, daß dieses noch rieselfähig bleibt. Diese Mischung (aus Adsorbens samt Prüfsubstanz) wird nun in ein übliches Chromatographie-Rohr übergeführt, das man bereits zuvor mit zwei Kieselgel-Reinigungszonen beschickt hat (eine mit KOH beladene Kieselgelschicht über einer mit Oleum beladenen Kieselgelschicht) und anschließend mit n-Hexan eluiert. Im Eluat werden die polychlorierten Biphenyle nach gaschromatographischer Trennung an einer Kapillarsäule durch Elektronenfang (electron capture detection = ECD) oder massenselektive Detektion gegen einen inneren PCB-Standard quantitativ bestimmt.
Die dabei ermittelten Mengenanteile an PCB betrugen 20 »g, bezogen auf 1 g Pigment (20 ppm PCB).
Die Quantifizierung der Probe kann auch nach anderen analytischen Methoden, etwa durch Hochdruckflüssigkeitschromatographie (HPLC) vorgenommen werden.

### Beispiel 2:

16,3 Teile 2,5-Dichloranilin werden wie in Beispiel 1 beschrieben diazotiert. Nach dem Filtrieren setzt man 4 Teile einer ca. 50 %igen wäßrigen Lösung von Methylol-acrylamid (N-Hydroxymethyl-acrylamid) zu und puffert die hergestellte salzsaure Diazoniumsalzlösung auf pH = 4 ab. Die Kupplung erfolgt wiederum durch Zulauf der alkalischen Lösung von 32,5 Teilen 5-(2-Hydroxy-3-naphthoylamino)-benzimidazol-2-on in die vorgelegte Diazokomponente bei 0-8 °C und ist beendet, wenn im Umsetzungsgemisch ein pH-Bereich von maximal 5,0 bis 5,2 erreicht ist.
Das nach dem Aufarbeiten und Trocknen erhaltene Farbmittel C.I. Pigment Brown 25 (No. 12510) weist einen analytisch ermittelten PCB-Gehalt von 25 »g/g (25 ppm) auf.

### Beispiel 3:

### (Vergleichstest)

Führt man das in Beispiel 1 beschriebene Verfahren durch indirekte Kupplung jedoch ohne Verwendung eines Olefins der Struktur gemäß Formel III durch, so enthält das auf diese Art isolierte Kupplungsprodukt Pigment Brown 25 (No. 12510) dann etwa 150 »g/g polychlorierter Biphenyle (150 ppm PCB).

### Beispiel 4:

40,0 Teile feinkristallines 2,4,5-Trichloranilin werden in einem Gemisch aus 200 Teilen Wasser, 200 Vol.-Teilen 30 %iger Salzsäure und 0,5 Teilen eines sekundären Alkansulfonats (Kettenlänge im Alkylrest 60 % C₁₃-C₁₅ und 40 % C₁₆-C₁₇) über Nacht angerührt. Nach Zugabe von Eis zur gebildeten Suspension des Hydrochlorids diazotiert man das Amin durch raschen Zulauf von 29 Vol.-Teilen einer 40 %igen wäßrigem Natriumnitritlösung und rührt den Ansatz 1 Stunde mit Nitritüberschuß nach. Anschließend werden darin vorhandene, überschüssige Nitritionen mittels Amidosulfonsäure zerstört, die Diazoniumsalzlösung wird geklärt und mit 5 Teilen Methacrylamid beschickt.
In einem Kuppelgefäß werden 64,5 Teile 2-Hydroxy-3-naphthoesäure-N-(4-ethoxyphenyl)-amid in 400 Teilen Wasser, dem man zuvor 28 Vol.-Teile 33 %ige Natronlauge zugesetzt hat, bei 80-85 °C gelöst. Die so erhaltene klare Lösung wird nach Zugabe von 15 Vol.-Teilen einer 10 %igen wäßrigen Lösung des zuvor genannten Alkansulfonats durch Eintragen von Eis auf 5-10 °C abgekühlt und unter Rühren mit 25 Vol.-Teilen Eisessig versetzt, wobei die Kupplungskomponente feinverteilt ausfällt.
Man kuppelt nunmehr bei 15-25 °C durch Zutropfen der obigen Diazoniumsalzlösung innerhalb von 2 Stunden zur vorgelegten Suspension des 2-Hydroxy-3-naphthoesäure-arylids, wobei der pH-Wert des Umsetzungsgemisches durch Zutropfen von 10 %iger Natronlauge im Bereich von pH 4,5 bis 4 gehalten wird. Das nach dem Auskuppeln erhaltene, in der üblichen Weise isolierte violettbraune Kupplungsprodukt 3-Hydroxy-N-(4-ethoxyphenyl)-4-(2,4,5-trichlorphenyl)azo-2-naphthalin-carboxamid (CAS-Nr. 5012-29-3) weist einen analytisch ermittelten PCB-Gehalt von 18 »g/g (18 ppm) auf.

### Beispiel 5:

### (Vergleichstest)

Synthetisiert man das in Beispiel 4 beschriebene Azopigment wiederum nach dem Verfahren entsprechend der sogenannten Pendelkupplung, wobei jedoch der Diazoniumsalz-Lösung hier aber kein Methacrylamid zugesetzt wurde, so enthält das gewonnene Kupplungsprodukt über 50 »g/g Hexachlorbiphenyle (über 50 ppm PCB).

### Beispiel 6:

32,2 Teile 2,2',5,5'-Tetrachlor-4,4'-diamino-biphenyl werden 8 Stunden lang in einem Gemisch aus 85 Vol.-Teilen Wasser und 85 Vol.-Teilen 30 %iger Salzsäure gerührt. Das hierbei gebildete Diamin-hydrochlorid diazotiert man sodann bei 0-10 °C durch Zutropfen von 28 Vol.-Teilen einer 40 %igen wäßrigen Natriumnitritlösung. Nach vollständiger Diazotierung wird die resultierende Bisdiazoniumsalzlösung durch Auffüllen mit Wasser auf 400 Vol.-Teile verdünnt, unter Zusatz von Kieselgel filtriert und ein im Filtrat eventuell vorhandener Überschuß an salpetriger Säure wird mittels Amidosulfonsäure zerstört.
In einem zweiten Gefäß werden 47 Teile Acetessigsäure-2-methyl-4-chlor-anilid in 400 Vol.-Teilen Wasser angerührt und durch Versetzen mit 20 Vol.-Teilen 33 %iger Natronlauge gelöst. Die erhaltene klare Lösung kühlt man nun auf 10 °C ab, setzt 1 Teil des in Beispiel 4 beschriebenen Alkansulfonats zu und bringt die Kupplungskomponente anschließend unter Rühren durch Zugabe von 14 Vol.-Teilen Eisessig, in dem 1 Teil Dimethyl-diallyl-ammoniumchlorid und 3 Teile (2-Hydroxyethyl)-methacrylat gelöst sind, zur Ausfällung.
Die Kupplung selbst erfolgt durch tropfenweises Zudosieren der obigen Bisdiazoniumsalzlösung in die vorgelegte Kupplungsuspension innerhalb von 2 Stunden bei 15-20 °C. Sobald der pH-Wert des Umsetzungsgemisches von anfangs 5,5 auf pH 4 bis 3,5 gesunken ist, beginnt man mit dem Zulauf von 6 %iger Natronlauge, um den pH-Bereich während dieser Reaktionsphase zwischen 4 und 3,5 zu halten. Nach beendeter Kupplung erhitzt man die Suspension auf 95 °C, rührt bei der erhöhten Temperatur noch 1 Stunde nach, filtriert das ausgefallene Pigment, wäscht es mit Wasser salzfrei und trocknet es.
Das so erhaltene Kupplungsprodukt C.I. Pigment Yellow 113 - No. 21126 (CAS-Nr. 14359-20-7) weist einen Gehalt an Tetrachlorbiphenyl von 22 »g/g (22 ppm) auf.

### Beispiel 7:

32,2 Teile 2,2',5,5'-Tetrachlor-4,4'-diamino-biphenyl werden wie in Beispiel 6 beschrieben diazotiert. Die nach dem Filtrieren erhaltene Lösung des Bisdiazoniumsalzes versetzt man dann mit 3 Teilen 2,2-Bisacrylamidoessigsäure, gelöst in 20 Vol.-Teilen Wasser.
Inzwischen hat man sich in einem separaten Lösegefäß eine Lösung von 42 Teilen Acetessigsäure-2,4-dimethyl-anilid in einem Gemisch aus 800 Vol.-Teilen Wasser und 20 Vol.-Teilen 33 %iger Natronlauge bereitet.
Zur Kupplung werden die auf gleiche Volumina gestellten Lösungen der beiden Reaktionskomponenten gleichzeitig unter Rühren in ein vorgelegtes Essigsäure/Natriumacetat-Puffergemisch, dem 2 Teile eines Kondensationsproduktes aus Stearylalkohol und 18 Äquivalenten Ethylenoxid zugesetzt sind, dosiert. Der pH-Wert im Kupplungsgefäß bewegt sich dabei zwischen pH 5,5 und 4,5.
In der nach der Kupplung in der üblichen Weise isolierten Disazoverbindung C.I. Pigment Yellow 81 - No. 21127 (CAS-Nr. 22094-93-5) wird ein Gehalt an polychlorierten Biphenylen von insgesamt 23 »g/g (23 ppm PCB) analytisch ermittelt.

### Beispiel 8:

### (Verleichstest)

Führt man die in Beispiel 7 beschriebene Kupplung zum C.I. Pigment Yellow 81 (No. 21127) hingegen in Abwesenheit des dort verwendeten Acrylsäureamid-Derivats durch, so weist das resultierende Kupplungsprodukt einen PCB-Gehalt von 70 »g/g (70 ppm) auf.

## Patentansprüche

1. Verfahren zur Herstellung von Monoazopigmenten der allgemeinen Formel (I) 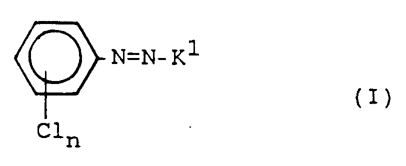 oder von Disazopigmenten der allgemeinen Formel II 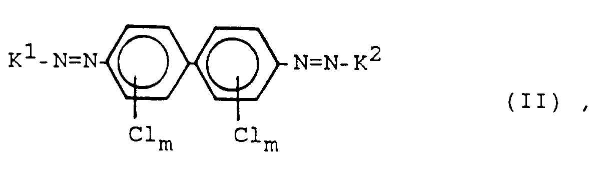 worin n für 1, 2 oder 3 und m für 1 oder 2 stehen, K¹ und K² jeweils den Rest einer CH-aciden Kupplungskomponente H-K¹ bzw. H-K² aus der Acetessigsäurearylamid- oder Naphthol-Reihe oder von heterocyclischer Struktur bedeuten und K¹ und K² gleich oder verschieden sind, welche einen Gehalt von höchstens 25 »g an polychlorierten Biphenylen mit mindestens 4 Chloratomen (PCB) pro Gramm Pigment aufweisen, durch Azokupplung im wäßrigen Medium, dadurch gekennzeichnet, daß man die Kupplungsreaktion in Gegenwart von begrenzt oder unbegrenzt wasserlöslichen Olefinen der allgemeinen Formel III 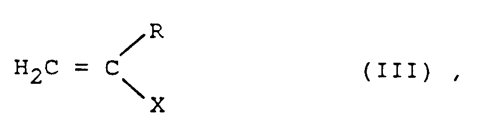 durchführt, worin
R ein Wasserstoffatom oder eine Alkyl- oder Alkoxygruppe darstellt und
X für einen Rest der Formeln
-COOR¹, -CONHR² oder -NR³COR⁴
steht oder - sofern R kein Alkoxy ist - auch den Rest -CN bedeutet, in denen
R¹ Wasserstoff, Alkyl oder Alkyl, das durch 1 oder mehrere Reste aus der Gruppe Hydroxy, Alkoxy, Amino, Alkylamino und Dialkylamino substituiert ist,
R² Wasserstoff, Alkyl oder Alkyl, das durch 1 oder mehrere Reste aus der Gruppe Hydroxy, Alkoxy, Amino, Alkylamino, Dialkylamino, Sulfo, Carboxy, Alkoxycarbonyl und gesättigtes oder ungesättigtes Alkanoylamino sowie entsprechendes N-Alkanoyl-N-alkyl-amino substituiert ist,
R³ Wasserstoff oder Alkyl und
R⁴ Alkyl
definieren.

2. Verfahren nach Anspruch 1, dadurch gekennzeichnet, daß in den Olefinen der Formel III
R Wasserstoff, C₁-C₄-Alkyl oder C₁-C₄-Alkoxy darstellt und der Rest
X die dafür in Anspruch 1 durch die dort genannten Gruppierungen ausgewiesene Bedeutung hat, wobei dann
R¹ Wasserstoff oder C₁-C₄-Alkyl, das durch 1 oder 2 Reste aus der Gruppe Hydroxy, C₁-C₄-Alkoxy, Amino, N-(C₁-C₄-Alkyl)-amino und N,N-Di-(C₁-C₄-Alkyl)-amino substituiert sein kann;
R² Wasserstoff oder C₁-C₄-Alkyl, das durch 1 bis 3 Reste aus der Gruppe Hydroxy, C₁-C₄-Alkoxy, Amino, N-(C₁-C₄-Alkyl)-amino, N,N-Di-(C₁-C₄-alkyl)-amino, Sulfo, Carboxy, (C₁-C₄-Alkoxy)-carbonyl, N-(C₂-C₅-Alkanoyl)-amino und N-(C₃-C₅-Alkenoyl)-amino substituiert sein kann;
R³ Wasserstoff oder C₁-C₄-Alkyl, und
R⁴ C₁-C₄-Alkyl,
definieren.

3. Verfahren nach Anspruch 1 oder 2, dadurch gekennzeichnet, daß in den Olefinen der Formel III
R Wasserstoff, Methyl, Methoxy oder Ethoxy darstellt und der Rest
X die dafür in Anspruch 1 durch die dort genannten Gruppierungen ausgewiesene Bedeutung hat, wobei dann
R¹ Wasserstoff, Methyl, Ethyl, 2-Hydroxyethyl, 3-Hydroxypropyl, 2-Aminoethyl, 2-(Dimethylamino)-ethyl, 3-Aminopropyl oder 3-(Dimethylamino)-propyl,
R² Wasserstoff, C₁-C₄-Alkyl oder C₁-C₄-Alkyl, das durch 1 oder 2 Reste aus der Gruppe Hydroxy, Methoxy, Ethoxy, Amino, Methylamino, Ethylamino, N,N-Dimethylamino, N,N-Diethylamino, Sulfo, Carboxy, Acetamido und Acrylamido substituiert ist,
R³ Wasserstoff, Methyl oder Ethyl und
R⁴ Methyl oder Ethyl
definieren.

4. Verfahren nach einem oder mehreren der Ansprüche 1 bis 3, dadurch gekennzeichnet, daß in den Olefinen der Formel III der Rest X die Gruppierung -CONHR² ist.

5. Verfahren nach einem oder mehreren der Ansprüche 1 bis 4, dadurch gekennzeichnet, daß die Olefine der Formel III in einer Menge von 0,01 bis 1 Gew.-%, bezogen auf die nach der Azokupplung erhaltene wäßrige Pigmentsuspension eingesetzt werden.

6. Verfahren nach Anspruch 5, dadurch gekennzeichnet, daß die eingesetzte Menge an den Olefinen 0,05 bis 0,5 Gew.-% beträgt.

7. Verfahren nach einem oder mehreren der Ansprüche 1 bis 6, dadurch gekennzeichnet, daß die Olefine der Formel III in einer Menge von 0,1 bis 10 Gew.-%, bezogen auf die Menge des bei der Kupplung gebildeten Pigmentes eingesetzt werden.

8. Verfahren nach Anspruch 7, dadurch gekennzeichnet, daß die eingesetzte Menge an den Olefinen 0,5 bis 5 % beträgt.

9. Verfahren nach einem oder mehreren der Ansprüche 1 bis 8, dadurch gekennzeichnet, daß die Azokupplung unter der Wirkung eines Puffergemisches bei einem pH-Wert im Bereich von 4 bis 7 durchgeführt wird.

10. Verwendung der nach einem oder mehreren der Ansprüche 1 bis 9 hergestellten Azopigmente als Farbmittel zum Pigmentieren von Druckfarben, Lacken, Dispersionsfarben, Kunststoffen, elektrophotographischen Tonern, Ink-Jet-Tinten oder Thermotransferbändern.

## Claims

1. A process for the preparation of a monoazo pigment of the formula (I) 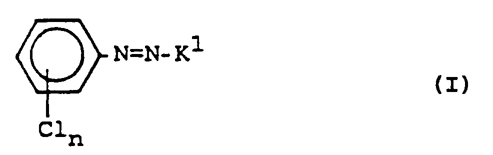 or of a disazo pigment of the formula II 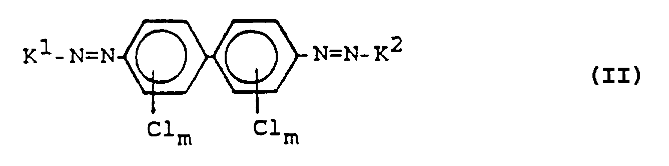 in which n is 1, 2 or 3, m is 1 or 2, K¹ and K² are each the radical of a CH-acid coupling component H-K¹ or H-K² from the acetoacetic acid arylamide or naphthol series or of heterocyclic structure and K¹ and K² are identical or different, which contains not more than 25 »g of poly-chlorinated biphenyls having at least 4 chlorine atoms (PCBs) per gram of pigment, by azo coupling in an aqueous medium, which comprises carrying out the coupling reaction in the presence of olefins of limited or unlimited water-solubility of the formula III 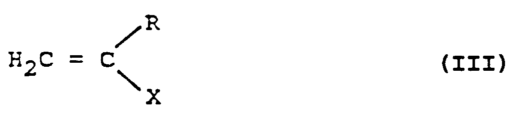 in which
R is a hydrogen atom or an alkyl or alkoxy group and
X is a radical of the formula
-COOR¹, -CONHR² or -NR³COR⁴
or else - if R is not alkoxy - is the radical -CN, in which
R¹ is hydrogen, alkyl or alkyl which is substituted by 1 or more radicals from the group comprising hydroxyl, alkoxy, amino, alkylamino and dialkylamino,
R² is hydrogen, alkyl or alkyl which is substituted by 1 or more radicals from the group comprising hydroxyl, alkoxy, amino, alkylamino, dialkylamino, sulfo, car-boxyl, alkoxycarbonyl and saturated or unsaturated alkanoylamino as well as corresponding N-alkanoyl-N-alkyl-amino,
R³ is hydrogen or alkyl and
R⁴ is alkyl.

2. The process as claimed in claim 1, wherein, in the olefins of the formula III,
R is hydrogen, C₁-C₄-alkyl or C₁-C₄-alkoxy, and the radical
X has the meaning shown for this in claim 1 by the groupings mentioned therein, in which case
R¹ is hydrogen or C₁-C₄-alkyl which can be substituted by 1 or 2 radicals from the group comprising hydroxyl, C₁-C₄-alkoxy, amino, N-(C₁-C₄-alkyl)-amino and N,N-di-(C₁-C₄-alkyl)-amino;
R² is hydrogen or C₁-C₄-alkyl which can be substituted by 1 to 3 radicals from the group comprising hydroxyl, C₁-C₄-alkoxy, amino, N-(C₁-C₄-alkyl)-amino, N,N-di-(C₁-C₄-alkyl)-amino, sulfo, carboxyl, (C₁-C₄-alkoxy)-carbonyl, N-(C₂-C₅-alkanoyl)-amino and N-(C₃-C₅-alkenoyl)-amino;
R³ is hydrogen or C₁-C₄-alkyl,
and
R⁴ is C₁-C₄-alkyl.

3. The process as claimed in claim 1 or 2, wherein, in the olefins of the formula III,
R is hydrogen, methyl, methoxy or ethoxy, and the radical
X has the meaning shown for this in claim 1 by the groupings mentioned therein, in which case
R¹ is hydrogen, methyl, ethyl, 2-hydroxyethyl, 3-hydroxypropyl, 2-aminoethyl, 2-(dimethylamino)-ethyl, 3-aminopropyl or 3-(dimethylamino)-propyl,
R² is hydrogen, C₁-C₄-alkyl or C₁-C₄-alkyl which is substituted by 1 or 2 radicals from the group comprising hydroxyl, methoxy, ethoxy, amino, methylamino, ethylamino, N,N-dimethylamino, N,N-diethylamino, sulfo, carboxyl, acetamido and acrylamido,
R³ is hydrogen, methyl or ethyl
and
R⁴ is methyl or ethyl.

4. The process as claimed in one or more of claims 1 to 3, wherein, in the olefins of the formula III, the radical X is the grouping -CONHR².

5. The process as claimed in one or more of claims 1 to 4, wherein the olefins of the formula III are employed in an amount of 0.01 to 1% by weight, based on the aqueous pigment suspension obtained after the azo coupling.

6. The process as claimed in claim 5, wherein the amount of olefins employed is 0.05 to 0.5% by weight.

7. The process as claimed in one or more of claims 1 to 6, wherein the olefins of the formula III are employed in an amount of 0.1 to 10% by weight, based on the amount of pigment formed in the coupling.

8. The process as claimed in claim 7, wherein the amount of olefins employed is 0.5 to 5%.

9. The process as claimed in one or more of claims 1 to 8, wherein the azo coupling is carried out under the action of a buffer mixture at a pH in the range from 4 to 7.

10. The use of the azo pigment prepared as claimed in one or more of claims 1 to 9 as a coloring agent for pigmenting printing inks, lacquers, emulsion paints, plastics, electrophotographic toners, ink jet inks or thermal transfer tapes.

## Revendications

1. Procédé pour la préparation de pigments monoazoïques de formule générale I 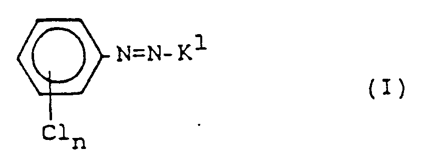 ou de pigments diazoïques de formule générale II 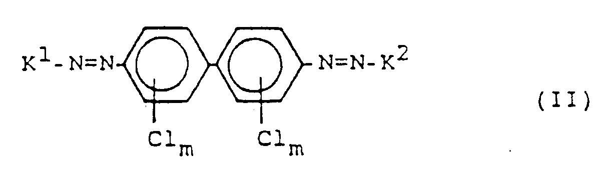 dans lesquelles n vaut 1, 2 ou 3 et m vaut 1 ou 2, K¹ et K² représentent à chaque fois le reste d'un composant de copulation à CH-acide de formule H-K¹ ou respectivement H-K², appartenant à la série des arylamides de l'acide acétoacétique ou du naphtol, ou de structure hétérocyclique, et dans lesquelles K¹ et K² peuvent être identiques ou différents, qui présentent une teneur d'au plus 25 »g en biphényles polychlorés comportant au moins 4 atomes de chlore (PCB) par gramme de pigment, par copulation azoïque en milieu aqueux, **caractérisé** en ce que l'on effectue la réaction de copulation en présence d'oléfines de solubilité dans l'eau limitée ou non limitée, de formule générale III 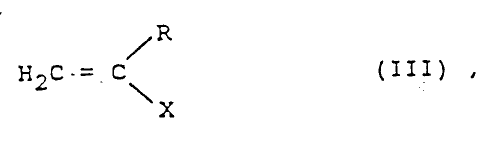 dans laquelle :
R représente un atome d'hydrogène ou un groupe alkyle ou alkoxy et
X représente un radical répondant à l'une des formules
-COOR¹, -CONHR² ou -NR₃COR₄
ou bien X représente - pour autant que R ne soit pas un groupe alkoxy - également le radical -CN, dans lesquelles
R¹ représente l'atome d'hydrogène, ou un groupe alkyle ou bien un groupe alkyle qui est substitué par un ou plusieurs radicaux appartenant au groupe : hydroxy, alkoxy, amino, alkylamino et dialkylamino,
R² représente un atome d'hydrogène, ou un groupe alkyle ou bien un groupe alkyle substitué par un ou plusieurs radicaux appartenant au groupe : hydroxy, alkoxy, amino, alkylamino, dialkylamino, sulfo, carboxy, alkoxy-carbonyle et alkanoylamino saturés ou insaturés ainsi que les N-alkanoyl-N-alkylamino correspondants,
R³ représente un atome d'hydrogène ou un groupe alkyle et
R⁴ représente un groupe alkyle.

2. Procédé selon la revendication 1 **caractérisé** en ce que dans les oléfines de formule III R représente un atome d'hydrogène, un groupe alkyle en C₁-C₄, ou un groupe alkoxy en C₁-C₄, et le radical X est tel que défini dans la revendication 1, avec R¹ représentant l'hydrogène ou un radical alkyle en C₁-C₄, qui peut être substitué par 1 ou 2 radicaux choisis dans le groupe : hydroxy, alkoxy en C₁-C₄, amino, N-(alkyle en C₁-C₄)-amino et N,N-di-(alkyle en C₁-C₄)-amino ;
R² représentant un atome d'hydrogène ou un radical alkyle en C₁-C₄, qui peut être substitué par 1 à 3 radicaux choisis dans le groupe : hydroxy, alkoxy en C₁-C₄, amino, N-(alkyle en C₁-C₄)-amino, N,N-di-(alkyle en C₁-C₄)-amino, sulfo, carboxy, (alkoxy en C₁-C₄)-carbonyle, N-(alkanoyle en C₂-C₅)-amino et N-(alkénoyle en C₃-C₅)-amino ;
R³ représentant un atome d'hydrogène ou un radical alkyle en C₁-C₄, et
R⁴ représentant un groupe alkyle en C₁-C₄.

3. Procédé selon la revendication 1 ou 2 **caractérisé** en ce que dans les oléfines de formule III R représente l'hydrogène, ou un groupe méthyle, méthoxy ou éthoxy et le radical
X est tel que défini dans la revendication 1, avec : R¹ représentant un atome d'hydrogène, ou bien un groupe méthyle, éthyle, 2-hydroxyéthyle, 3-hydroxypropyle, 2-aminoéthyle, 2-(diméthylamino)-éthyle, 3-aminopropyle ou 3-(diméthylamino)-propyle,
R² représentant un atome d'hydrogène, ou bien un groupe alkyle en C₁-C₄ ou un groupe alkyle en C₁-C₄ qui est substitué par 1 ou 2 radicaux choisis dans le groupe : hydroxy, méthoxy, éthoxy, amino, méthylamino, éthylamino, N,N-diméthylamino, N,N-diéthylamino, sulfo, carboxy, acétamido et acrylamido,
R³ représentant un atome d'hydrogène ou un groupe méthyle ou éthyle et
R⁴ représentant un groupe méthyle ou éthyle.

4. Procédé selon une ou plusieurs des revendications 1 à 3, **caractérisé** en ce que dans les oléfines de formule III le radical X représente le groupe -CONHR².

5. Procédé selon une ou plusieurs des revendications 1 à 4, **caractérisé** en ce que les oléfines de formule III sont utilisées en quantité de 0,01 à 1 % en poids par rapport à la suspension aqueuse de pigment obtenue après la copulation azoïque.

6. Procédé selon la revendication 5, **caractérisé** en ce que la quantité introduite d'oléfines représente 0,05 à 0,5 % en poids.

7. Procédé selon une ou plusieurs des revendications 1 à 6, **caractérisé** en ce que les oléfines de formule III sont introduites en quantité de 0,1 à 10 % en poids par rapport à la quantité de pigment formé lors de la copulation.

8. Procédé selon la revendication 7, **caractérisé** en ce que la quantité introduite d'oléfines s'élève à 0,5 à 5 %.

9. Procédé selon une ou plusieurs des revendications 1 à 8, **caractérisé** en ce que l'on effectue la copulation azoïque sous l'action d'un mélange tampon à une valeur de pH comprise dans le domaine de 4 à 7.

10. Utilisation des pigments azoïques préparés selon une ou plusieurs des revendications 1 à 9, comme colorant pour la pigmentation de colorants d'impression, de vernis, de colorants pour dispersions, de matières plastiques, de toners électrophotographiques, d'encres pour impression à jet d'encre ou de supports pour thermotransfert.
